# FASCICULE DE BREVET EUROPEEN

(11) **EP 3 239 845 B1**
(45) Date de publication et mention de la délivrance du brevet: **13.02.2019**
(21) Numéro de dépôt: 17168202.4
(22) Date de dépôt: 26.04.2017
(51) Int. Cl.: G06F 12/02, G06F 12/14, G06F 21/79, G06F 21/12, G06F 21/14, G06F 21/77

(54) **PROCÉDÉ D'ALLOCATION D'ESPACE MÉMOIRE**
VERFAHREN ZUR ZUTEILUNG VON SPEICHERPLATZ
METHOD FOR ALLOCATING MEMORY SPACE

(30) Priorité: 27.04.2016 FR 1653719
(43) Date de publication de la demande: 01.11.2017
(73) Titulaire: Idemia Identity & Security France, 92400 Courbevoie (FR)
(72) Inventeur: DUMAS, Pascal François Paul, 92130 ISSY LES MOULINEAUX (FR)
(74) Mandataire: Regimbeau

(56) Documents cités:
- WO-A2-2012/129637
- US-B1- 6 643 754
- US-B1- 7 546 430
- CHONGKYUNG KIL ET AL: "Address Space Layout Permutation (ASLP): Towards Fine-Grained Randomization of Commodity Software", COMPUTER SECURITY APPLICATIONS CONFERENCE, 2006. ACSAC '06. 22ND ANNUAL, IEEE, PI, 2 décembre 2006 (2006-12-02), pages 339-348, XP031033573, ISBN: 978-0-7695-2716-1

## Description

### DOMAINE DE L'INVENTION

La présente invention concerne un procédé d'allocation d'espace dans une mémoire.

### ETAT DE LA TECHNIQUE

De façon conventionnelle, l'écriture de données dans une mémoire est précédée par une étape d'allocation d'espace dans la mémoire, cet espace servant à héberger les futures données. Sur la base d'une taille à allouer passée en paramètre, un algorithme d'allocation recherche et sélectionne une zone de la mémoire ayant au moins cette taille et qui est marquée comme libre dans la mémoire (c'est-à-dire non déjà allouée). Typiquement, l'algorithme d'allocation retourne une adresse de la zone sélectionnée.

Un algorithme d'allocation est généralement déterministe : pour une configuration de la mémoire déterminée, et pour une taille à allouer déterminée, la zone sélectionnée dans la mémoire par l'algorithme est toujours le même.

A cet égard, on connaît des algorithmes d'allocation poursuivant des objectifs différents et même concurrents. Par exemple, certains algorithmes déterministes recherchent et sélectionnent une zone de la mémoire qui minimise la durée d'exécution de l'algorithme d'allocation mais qui est susceptible de fragmenter la mémoire. Le document de l'art antérieur de numéro de publication WO2012/129637 A2 divulgue un procédé d'allocation déterministe de mémoire pour protéger les données d'attaques par localisation de données.

Le document de l'art antérieur de numéro de publication US 6 643 754 B1 divulgue une politique déterministe d'allocation mémoire de type "first-fit" et *best-fit* dans une mémoire et un procédé de coalescence de blocs libres adjacents dans un stockage persistant permettant de maintenir une en-tête pour chaque bloc indiquant la taille et un statut d'allocation du bloc.

Le document de l'art antérieur de numéro de publication US 7 546 430 B1 divulgue un procédé d'allocation aléatoire de l'espace d'adressage (ASLR) définissant une adresse de base randomisée afin d'obscurcir la localisation d'une donnée sensible et de protéger l'intégrité du contenu d'un élément sécurisé. D'autres algorithmes déterministes, plus lents, recherchent et sélectionnent une zone de la mémoire qui minimise la fragmentation de la mémoire.

Certaines mémoires sont tout particulièrement destinées à stocker des données confidentielles. C'est le cas des mémoires des dispositifs que l'on appelle « éléments sécurisés » (« Secure Element » en anglais). Pour cette raison, il est important de protéger la confidentialité et l'intégrité du contenu des mémoires de tels éléments sécurisés contre différents types d'attaque: altération, observation, perturbation.

Une méthode d'attaque d'élément sécurisée connue consiste à trouver la localisation précise d'une donnée sensible dans la mémoire afin de la modifier directement, ou d'en perturber la lecture ou l'écriture, ou d'en observer l'utilisation afin d'en déduire la valeur.

Dans le cas d'un modèle d'élément sécurisé produit en série, à faible coût, et mettant en oeuvre une méthode d'allocation déterministe, alors une attaque par localisation de donnée sensible dans la mémoire d'un échantillon donné de ce modèle peut être répliquée à volonté pour tout autre échantillon du même modèle, sans effort additionnel à fournir.

Pour protéger une mémoire d'élément sécurisé contre une telle attaque par localisation de donnée, il a été proposé d'utiliser une méthode d'allocation d'espace mémoire aléatoire (ASLR ou « Address space layout randomization »). De la sorte, la zone allouée n'est pas toujours la même, pour une taille d'espace déterminée et pour une configuration mémoire déterminée, si bien qu'une donnée particulière pourra se trouver à des endroits différents de la mémoire, pour deux exécutions différentes (par exemple sur deux échantillons différents du même modèle d'élément sécurisé).

Toutefois, la mise en oeuvre d'une telle méthode peut supprimer les avantages liés à une allocation déterministe : une telle méthode peut ainsi s'avérer plus lente et/ou fragmenter davantage la mémoire qu'une allocation déterministe.

### EXPOSE DE L'INVENTION

Un but de l'invention est donc de protéger efficacement une mémoire contre des attaques de type « localisation de données », tout en conservant les avantages d'une méthode d'allocation déterministe.

Il est dès lors proposé, selon un premier aspect de l'invention, un procédé d'allocation d'un espace de taille prédéterminée dans une mémoire, comprenant des étapes de :
- présélection déterministe, dans la mémoire, d'au moins une zone libre ayant une taille supérieure à la taille prédéterminée,
- sélection, dans une zone libre présélectionnée au cours de l'étape de présélection, d'une sous-zone ayant une taille égale à la taille prédéterminée, la sélection de la sous-zone étant variable pour une même zone libre présélectionnée,
- utilisation de la sous-zone sélectionnée comme espace mémoire alloué.

La sous-zone est choisie dans un ensemble constitué de seulement deux sous-zones : une première sous-zone ayant une adresse de début égale à l'adresse de début de la zone libre sélectionnée, et une deuxième sous-zone ayant une adresse de fin égale à l'adresse de fin de la zone libre sélectionnée.

L'étape de présélection de la zone libre suit une politique déterministe : sa mise en oeuvre permet donc de bénéficier des avantages procurés par cette politique déterministe.

Au contraire de la zone libre, qui est entièrement déterminable à partir de la taille prédéterminée demandée et de la configuration courante de la mémoire, une sous-zone est sélectionnée de façon variable. En d'autres termes, pour une zone présélectionnée déterminée, et pour une configuration déterminée de la mémoire, deux exécutions différentes de l'étape de sélection de la sous-zone peuvent fournir deux résultats différents, c'est-à-dire sélectionner deux sous-zones différentes à l'intérieur de la zone libre. Ainsi, le procédé proposé permet de protéger efficacement une telle mémoire contre des attaques de type « localisation de données ».

En définitive, le procédé d'allocation ainsi proposé permet de conserver les avantages de la politique d'allocation déterministe mise en oeuvre au cours de l'étape de présélection, tout en y ajoutant une possibilité de diversification (grâce à l'étape de sélection variable de la sous-zone).

De plus, le fait de ne limiter la sélection de la sous-zone qu'à la première sous-zone et à la deuxième sous-zone a pour effet de minimiser fortement la fragmentation de la mémoire.

Le procédé d'allocation présente en outre d'autres avantages :
- il ne nécessite à aucun moment d'allouer de l'espace supplémentaire par rapport au mécanisme d'allocation mémoire normal ;
- il est applicable à tous types de mémoires (volatile et non volatile) ;
- il applicable à des allocations en vue de la mémorisation de données et de code de programme (par exemple du code Java) ;
- il permet, si nécessaire, de répliquer à volonté une cartographie mémoire ;
- il ne nécessite que très peu de ressources ;
- il est rapide d'exécution.

Lorsque l'étape de présélection déterministe utilise une politique de type « first-fit », alors le procédé d'allocation offre un bon compromis entre rapidité d'exécution et protection contre des attaques de de type « localisation de données ».

Lorsque l'étape de présélection déterministe utilise une politique de type « next-fit », alors le procédé d'allocation est encore plus rapide qu'avec la politique « first-fit », mais nécessite de conserver en mémoire des informations relatives à la dernière allocation effectuée.

Lorsque l'étape de présélection déterministe utilise une politique de type « best-fit », alors le procédé d'allocation offre un bon compromis entre minimisation de la fragmentation de la mémoire et protection contre des attaques de type « localisation de données ».

La sous-zone peut être choisie aléatoirement dans la zone libre sélectionnée, ce qui permet de rendre totalement imprévisible le résultat de l'allocation, et par conséquent de rendre imprévisible l'emplacement d'une donnée à écrire en mémoire.

Alternativement, la sous-zone peut être choisie pseudo-aléatoirement dans la zone libre sélectionnée, ce qui permet d'aider un programmeur à débugger le code exécutant le procédé d'allocation, tout en rendant quasiment imprévisible le résultat de l'allocation.

La zone libre sélectionnée peut être d'un seul tenant et/ou la sous-zone être d'un seul tenant, ce qui simplifie l'implémentation du procédé d'allocation.

Selon un deuxième aspect de l'invention, il est proposé un produit programme d'ordinateur comprenant des instructions de code de programme pour l'exécution des étapes
du procédé d'allocation selon le premier aspect de l'invention, lorsque ce programme est exécuté par au moins un processeur.

Selon un troisième aspect de l'invention, il est proposé un élément sécurisé, tel qu'une carte à puce, comprenant au moins une mémoire, et au moins un processeur configuré pour exécuter le produit programme d'ordinateur selon le deuxième aspect de l'invention, en vue d'allouer de l'espace dans la mémoire.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente de façon schématique un élément sécurisé selon un mode de réalisation de l'invention.
- La figure 2 est un organigramme d'étapes d'un procédé d'allocation d'espace mémoire selon un mode de réalisation de l'invention.
- Les figures 3, 4 et 5 représentent de façon schématique le contenu d'une mémoire dans trois états différents.

Sur l'ensemble des figures, les éléments similaires portent des références identiques.

### DESCRIPTION DETAILLEE DE L'INVENTION

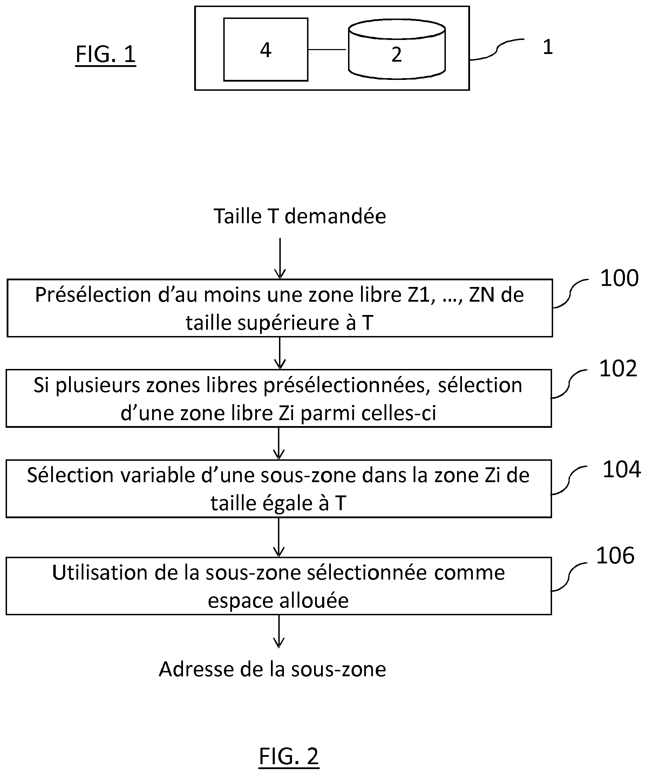

En référence la **figure 1****,** un élément sécurisé 1 comprend au moins une mémoire 2 et au moins un processeur 3.

L'élément sécurisé 1 est par exemple une carte à puce.

La mémoire 2 est de type EEPROM, FLASH, disque dur, SSD ou tout autre type de mémoire apte à mémoriser des données, en particulier des données confidentielles.

La mémoire 2 est par exemple destinée à mémoriser des clés cryptographiques.

Le processeur 3 est configuré pour exécuter les instructions de code de programme d'un programme de gestion de la mémoire 2 de l'élément sécurisé 1. Ce programme de gestion 2 met en oeuvre un procédé d'allocation dans le fonctionnement sera détaillé plus loin.

Le programme 4 est également configuré pour exécuter les instructions de code de d'autres programmes, par exemple des programmes utilisateur, qui appellent le programme de gestion et accèdent en lecture et/ou en écriture à la mémoire 2.

Le programme de gestion de la mémoire 2 est par exemple mémorisé dans la mémoire 2 elle-même, ou dans une autre mémoire qui est dédiée à cet effet.

Dans ce qui suit, on considère que la mémoire 2 présente une certaine taille en bits et que cette mémoire est divisée en unités mémoire, chaque unité mémoire étant dans un état « libre » ou dans un état « alloué ». Chaque unité mémoire dispose d'une adresse qui lui est propre dans la mémoire.

Dans le présent document, on considère qu'une zone de la mémoire 2 est définie par au moins une adresse de début, au moins une adresse de fin et une taille en nombre d'unités mémoire. En particulier, lorsque la zone considérée est d'un seul tenant, cette zone peut être définie par une unique adresse de début et une unique adresse de fin. On peut également définir une zone d'un seul tenant par une adresse de début et une taille, l'adresse de fin étant alors égale à l'adresse de début plus la taille.

Il est également supposé dans ce qui suit que l'adresse de fin d'une première zone d'un seul tenant est égale à l'adresse de début d'une deuxième zone d'un seul tenant qui suit immédiatement la première zone dans la mémoire 2.

En référence à la **figure 2****,** un procédé d'allocation d'espace dans la mémoire 2 comprend les étapes suivantes.

Un programme utilisateur appelle une fonction ou méthode d'allocation implémentée dans le programme de gestion. Est passé en paramètre de cette fonction ou méthode une taille T à allouer (en nombre d'unités mémoire par exemple).

Dans une étape 100, le programme de gestion sélectionne dans la mémoire 2 au moins une zone libre de la mémoire 2 présentant une taille strictement supérieure à la taille T qui a été demandée, et qui est libre (c'est-à-dire constituée d'unités mémoire chacune dans l'état « libre »).

Cette présélection est conduite selon une politique déterministe.

L'étape de présélection 100 est par exemple conduite selon la politique déterministe « first-fit ». Dans ce cas, le programme de gestion parcourt la mémoire selon un sens de parcours prédéterminé (par exemple, par adresse croissante ou par adresse décroissante). Le programme de gestion présélectionne la première zone libre trouvée en mémoire ayant une taille supérieure ou égale à la taille demandée. Cette politique « first-fit » est particulièrement rapide d'exécution.

En variante, la présélection 100 est conduite selon la politique « next-fit ». Dans ce cas, plutôt que de parcourir l'intégralité de la mémoire pour déterminer une zone libre suffisamment grande en partant d'une extrémité de la mémoire, conformément à la politique « first-fit », le programme de gestion parcourt la mémoire selon un sens de parcours prédéterminé en partant de l'adresse de la dernière allocation effectuée par le programme de gestion. Ainsi, la rapidité d'exécution de la présélection est encore plus rapide qu'avec la politique « first-fit », moyennant toutefois la mémorisation des informations relatives à la dernière allocation effectuée (par exemple l'adresse de début de la dernière zone allouée.

Dans une autre variante, la présélection 100 est conduite selon la politique « best-fit », connue de l'homme du métier. Dans ce cas, la zone présélectionnée à l'issue de l'étape 100 est une zone dont la taille est supérieure à, mais au plus proche de la taille T, ce qui permet de minimiser la fragmentation de la mémoire 2 induite par l'allocation en cours.

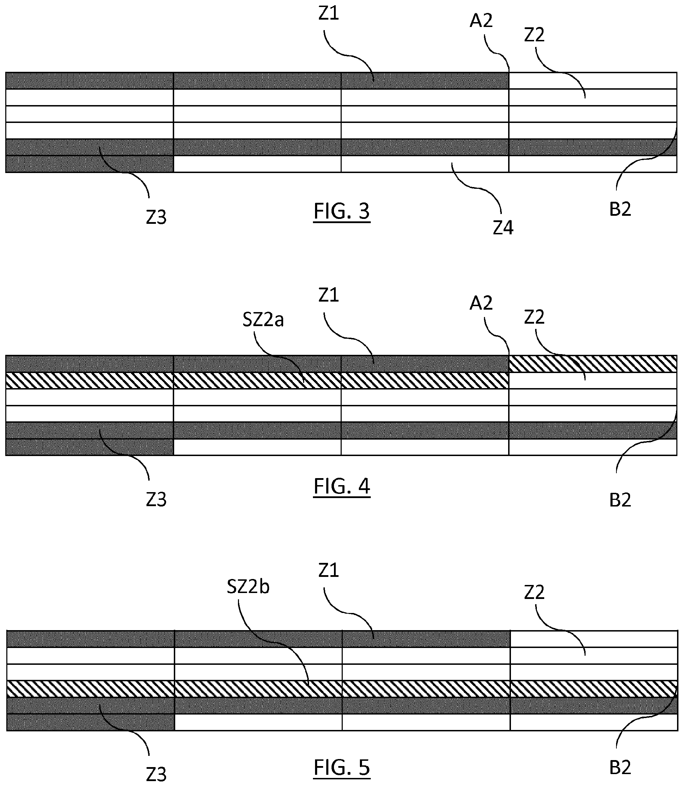

La **figure 3** illustre de façon schématique une mémoire 2 comprenant 20 unités mémoire, chaque unité étant représentée par un rectangle. Les unités mémoires dans l'état « libre » sont représentées en blanc, et les unités mémoire en gris sont dans l'état « alloué ». Par convention, l'unité en haut à gauche de la figure 4 a l'adresse de début de la mémoire (par exemple l'adresse « zéro »), et l'unité mémoire 2 en bas à droite de la figure 4 a l'adresse de fin de la mémoire 2.

Ainsi la mémoire 2 représentée en figure 4 comporte les zones successives suivantes, depuis son adresse de début jusqu'à son adresse de fin :
- une zone Z1 allouée de taille 3 (comptée en nombre d'unités mémoire) ;
- une zone Z2 libre de taille 13 ;
- une taille Z3 allouée de taille 5 ; et
- une zone Z4 libre de taille 3.

Par exemple, si T=4, ne peut être présélectionnée au cours de l'étape 100 que la zone Z2 de puisqu'il s'agit de la seule zone libre qui est de taille supérieure à 4.

Néanmoins, dans d'autres configurations de la mémoire 2, il se peut que plusieurs zones puissent remplir simultanément le critère fixé par la politique déterministe utilisée au cours de l'étape de présélection 100. Par exemple, dans le cas où la politique « best-fit » est utilisée au cours de l'étape de présélection 100, plusieurs zones minimisant la fragmentation de la mémoire en des proportions identiques peuvent être présélectionnées 100 (par exemple plusieurs zones libres trouvées présentant des tailles identiques).

Lorsque plusieurs zones sont ainsi présélectionnées 100, l'une de ces zones présélectionnée est sélectionnée dans une étape 102.

La sélection 102 peut être conduite de façon aléatoire ou de façon pseudo-aléatoire.

Dans une étape 104, le programme de gestion procède à la sélection d'une sous-zone qui se trouve à l'intérieur de la zone libre sélectionnée au cours de l'étape 102 (ou présélectionnée de façon unique au cours de l'étape 100).

La sous-zone sélectionnée a une taille égale à la taille T demandée.

Au contraire de l'étape 100, qui met en oeuvre une politique déterministe, la sous-zone sélectionnée au cours de l'étape 104 est variable. En d'autres termes, pour une zone présélectionnée déterminée, et pour une configuration déterminée de la mémoire 2, deux exécutions différentes de l'étape 104 par le programme de gestion mémoire peuvent fournir deux résultats différents, c'est-à-dire sélectionner deux sous-zones différentes de la zone libre.

Dans un mode de réalisation, la sélection 104 de la sous zone est aléatoire. A cette fin, un générateur de nombres aléatoires (RNG) est utilisé par le programme de gestion. Il est dans ce cas parfaitement impossible de prédire la sous zone qui va être sélectionnée par le programme de gestion au cours d'une exécution future de l'étape 104, ce qui permet d'améliorer grandement la protection de l'élément sécurisé contre des attaques visant à localiser l'emplacement de données sensibles. Une telle sélection 104 aléatoire peut par exemple se fonder sur des phénomènes physiques imprévisibles, tels qu'un courant électrique circulant dans l'élément sécurisé 1.

Dans un autre mode de réalisation, la sélection 104 de la sous zone est pseudo-aléatoire. A cette fin, un générateur de nombres pseudo-aléatoires (PRNG) est utilisé par le programme de gestion. Dans ce cas, il est possible de prédire une sélection prochaine mise en oeuvre par le programme de gestion, moyennant la connaissance des paramètres du générateur pseudo-aléatoire utilisé (en général, au moins un de ces paramètres est une graine). Une telle sélection 104 pseudo-aléatoire est particulièrement avantageuse à des fins de debug par un programmeur qui implémente le programme de gestion, tout en fournissant un degré de sécurisé raisonnable pour l'élément sécurisé 1 ; la prédiction susmentionnée reste en effet très difficile à effectuer sans la connaissance des paramètres du générateur pseudo-aléatoire utilisé.

La sous-zone est sélectionnée parmi plusieurs sous-zones candidates incluses dans la zone libre présélectionnée (et de taille T).

Dans le cas où l'étape 104 est configurée pour rechercher une sous-zone qui est d'un seul tenant, dans une zone libre elle-même d'un seul tenant, les sous-zones candidates se distinguent uniquement par des adresses de début différentes ; ces sous-zones sont simplement décalées les unes par rapport aux autres dans la zone libre présélectionnée.

Une première sous-zone candidate a une adresse de début égale à l'adresse de début de la zone libre sélectionnée. La **figure 4** illustre un tel choix : la zone libre sélectionnée Z2, de taille 13, a A2 comme adresse de début ; peut être sélectionnée au cours de l'étape 104 la sous-zone SZ2a de taille T ayant A2 comme adresse de début (la sous zone sélectionnée a donc A2+T comme adresse de fin).

Une deuxième sous-zone candidate a une adresse de fin égale à l'adresse de fin de la zone libre sélectionnée. La **figure 5** illustre un tel choix : la zone libre sélectionnée Z2, de taille 13, a B2=A2+13 comme adresse de fin ; peut être sélectionnée au cours de l'étape 104 la sous-zone SZ2b de taille T ayant B2 comme adresse de fin (la sous-zone sélectionnée a donc B2-T comme adresse de début).

Les sous-zones candidates sont constituées de la première sous-zone (en début de la zone libre) et de la deuxième sous-zone (en fin de la zone libre) susmentionnées. Ceci permet de limiter de façon importante la fragmentation de la mémoire 2. En effet, chacune des deux sous-zones sélectionnables 104 sont contigües à des zones déjà allouées (Z1 et Z3 dans l'exemple illustré sur les figures 3 à 5). La cartographie de la mémoire 2 varie alors suivant la puissance de 2 du nombre de zones allouées. Dans une carte à puce, il est commun d'allouer plusieurs dizaines voire plusieurs centaines de zones différentes en vue de mémoriser des données distinctes, ce qui introduit une variabilité conséquente de la cartographie d'un échantillon d'un modèle d'élément sécurisé à l'autre.

Dans une étape 106, le programme utilise la sous-zone sélectionnée au cours de l'étape 104 comme espace alloué.

Cette utilisation 106 comprend par exemple un marquage des unités mémoire constituant la sous-zone sélectionnée dans l'état « alloué ». Bien entendu, les autres unités mémoire contenue dans la zone libre sélectionnée au cours de l'étape 100 restent dans l'état « libre », donc sont disponibles pour une demande d'allocation subséquente. Dans le cas illustré sur les figures 4 et 5 pour T=4, la zone libre Z2 est de taille 13 donc il reste à l'issue de l'étape 106, 9 unités mémoires libres localisés entre les zones Z2 et Z3 allouées.

L'utilisation 106 comprend en outre la fourniture, au programme ayant demandé l'allocation d'un espace de taille T, une adresse de la sous-zone allouée (par exemple son adresse de début).

Lorsque le procédé d'allocation est implémenté dans une fonction ou méthode de programme prenant en paramètre la taille T, cette adresse peut être un résultat retourné par cette fonction ou méthode.

A ce stade, des données peuvent être écrites dans la sous-zone allouée.

Lorsque la politique « next-fit » est utilisée au cours de l'étape de présélection 100, alors le programme de gestion mémorise en outre des informations relatives à la sous-zone allouée (typiquement son adresse de début). En réponse à une demande d'allocation subséquente, le programme de gestion parcourra la mémoire 2 selon un sens de parcours prédéterminé, en commençant par cette adresse mémorisée.

La libération d'une zone précédemment allouée au moyen du procédé selon l'invention est mise en oeuvre de façon classique. A l'issue d'une telle libération, les unités mémoire constituant la zone libérée sont configurées dans l'état « libre ».

Le procédé d'allocation d'espace mémoire n'est évidemment pas limité au mode de réalisation qui vient décrit en relation avec les figures. En particulier, il a été pris l'exemple dans ce qui précède que les zones examinées par le programme de gestion mémoire sont d'un seul tenant. En particulier, le procédé selon l'invention peut être généralisé de sorte que l'étape de présélection 100 et/ou l'étape de sélection 102 et/ou l'étape de sélection 104 donnent comme résultats respectifs des zones mémoires qui ne sont pas forcément d'un seul tenant, mais constituées de plusieurs blocs d'un seul tenant.

## Revendications

1. Procédé d'allocation d'un espace de taille prédéterminée dans une mémoire (2), **caractérisé en ce qu'**il comprend des étapes de :
• présélection (100) déterministe, dans la mémoire (2), d'au moins une zone libre ayant une taille supérieure à la taille prédéterminée,
• sélection (104), dans une zone libre présélectionnée au cours de l'étape de présélection, d'une sous-zone ayant une taille égale à la taille prédéterminée, la sélection de la sous-zone étant variable pour une même zone libre présélectionnée, dans lequel la sous-zone est choisie dans un ensemble constitué de :
• d'une première sous-zone ayant une adresse de début égale à l'adresse de début de la zone libre sélectionnée, et
• d'une deuxième sous-zone ayant une adresse de fin égale à l'adresse de fin de la zone libre sélectionnée,
• utilisation (106) de la sous-zone sélectionnée comme espace mémoire alloué.

2. Procédé selon la revendication précédente, dans lequel la sous-zone est choisie (102) aléatoirement dans la zone libre sélectionnée.

3. Procédé selon la revendication 1, dans lequel la sous-zone est choisie (102) pseudo-aléatoirement dans la zone libre sélectionnée.

4. Procédé selon l'une des revendications précédentes, dans lequel la zone libre sélectionnée (100) est d'un seul tenant et/ou dans lequel la sous-zone réservée est d'un seul tenant.

5. Procédé selon l'une des revendications précédentes, dans lequel la présélection déterministe (100) utilise une politique de type « best-fit ».

6. Procédé selon l'une des revendications 1 à 4, dans lequel la présélection déterministe (100) utilise une politique de type « next fit ».

7. Procédé selon l'une des revendications 1 à 4, dans lequel la présélection déterministe (100) utilise une politique de type « first-fit ».

8. Procédé selon l'une des revendications précédentes, dans lequel, si plusieurs zones libres sont présélectionnées (100), alors l'étape de sélection (104) de la sous-zone est mise en oeuvre dans une zone libre choisie (102) aléatoirement ou pseudo-aléatoirement parmi les zones libres présélectionnées (100).

9. Produit programme d'ordinateur comprenant des instructions de code de programme pour l'exécution des étapes du procédé d'allocation selon l'une de revendications précédentes, lorsque ce programme est exécuté par au moins un processeur (3).

10. Elément sécurisé (1), tel qu'une carte à puce, comprenant :
• au moins une mémoire (2),
• au moins un processeur (3) configuré pour exécuter le produit programme d'ordinateur selon la revendication précédente, en vue d'allouer de l'espace dans la mémoire (2).

## Patentansprüche

1. Verfahren zur Zuteilung eines Platzes von vorbestimmter Größe in einem Speicher (2), **dadurch gekennzeichnet, dass** es Schritte umfasst der:
• deterministischen Vorauswahl (100), im Speicher (2), von mindestens einem freien Bereich, der eine Größe aufweist, die größer als die vorbestimmte Größe ist,
• Auswahl (104), in einem während des Vorauswahlschritts vorausgewählten freien Bereich, eines Teilbereichs, der eine Größe aufweist, die gleich der vorbestimmten Größe ist, wobei die Auswahl des Teilbereichs bei ein und demselben vorausgewählten freien Bereich variabel ist, wobei der Teilbereich aus einem Satz ausgewählt wird, bestehend aus:
• einem ersten Teilbereich, der eine Startadresse aufweist, die gleich der Startadresse des ausgewählten freien Bereichs ist, und
• einem zweiten Teilbereich, der eine Endadresse aufweist, die gleich der Endadresse des ausgewählten freien Bereichs ist,
• Verwendung (106) des ausgewählten Teilbereichs als zugeteilten Speicherplatz.

2. Verfahren nach dem vorstehenden Anspruch, wobei der Teilbereich im ausgewählten freien Bereich zufällig ausgewählt (102) wird.

3. Verfahren nach Anspruch 1, wobei der Teilbereich im ausgewählten freien Bereich pseudozufällig ausgewählt (102) wird.

4. Verfahren nach einem der vorstehenden Ansprüche, wobei der ausgewählte freie Bereich (100) aus einem Stück ist und/oder wobei der reservierte Teilbereich aus einem Stück ist.

5. Verfahren nach einem der vorstehenden Ansprüche, wobei die deterministische Vorauswahl (100) eine Politik vom Typ "Best Fit" verwendet.

6. Verfahren nach einem der Ansprüche 1 bis 4, wobei die deterministische Vorauswahl (100) eine Politik vom Typ "Next Fit" verwendet.

7. Verfahren nach einem der Ansprüche 1 bis 4, wobei die deterministische Vorauswahl (100) eine Politik vom Typ "First Fit" verwendet.

8. Verfahren nach einem der vorstehenden Ansprüche, wobei, wenn mehrere freie Bereiche (100) vorausgewählt werden, dann der Schritt der Vorauswahl (104) des Teilbereichs in einem aus den vorausgewählten freien Bereichen (100) zufällig oder pseudozufällig ausgewählten freien Bereich (102) umgesetzt wird.

9. Computerprogrammprodukt, das Programmcodeanweisungen für das Ausführen der Schritte des Zuteilungsverfahrens nach einem der vorstehenden Ansprüche umfasst, wenn dieses Programm von mindestens einem Prozessor (3) ausgeführt wird.

10. Sicheres Element (1), wie etwa eine Chipkarte, umfassend:
• mindestens einen Speicher (2),
• mindestens einen Prozessor (3), der dafür konfiguriert ist, das Computerprogrammprodukt nach dem vorstehenden Anspruch auszuführen, um Platz im Speicher (2) zuzuteilen.

## Claims

1. Method for allocating a space of predetermined size in a memory of a smart card, **characterised in that** it comprises steps of:
• preselecting (100) in the memory (2), at least one free zone having a size larger than the predetermined size using a deterministic policy;
• selecting (104), in a preselected free zone, a sub-zone having a size equal to the predetermined size, wherein selecting the sub-zone is variable for one same preselected free zone, wherein the sub-zone is selected from a set constituted of:
• a first sub-zone having a start address equal to the start address of the selected free zone, and
• a second sub-zone having an end address equal to the end address of the selected free zone,
• use (106) of the selected sub-zone as allocated memory space.

2. Method according to the preceding claim, wherein the sub-zone is selected (102) randomly in the selected free zone.

3. Method according to claim 1, wherein the sub-zone is selected (102) pseudo-randomly in the selected free zone.

4. Method according to one of the preceding claims, wherein the selected free zone (100) is contiguous and/or wherein the reserved sub-zone is contiguous.

5. Method according to one of the preceding claims, wherein the deterministic preselection (100) uses a "best-fit" type policy.

6. Method according to one of claims 1 to 4, wherein the deterministic preselection (100) uses a "next-fit" type policy.

7. Method according to one of claims 1 to 4, wherein the deterministic preselection (100) uses a "first-fit" type policy.

8. Method according to one of the preceding claims, wherein, if several free zones are preselected (100), then the step of selecting (104) the sub-zone is conducted in a free zone selected (102) randomly or pseudo-randomly from among the preselected free zones (100).

9. Computer program product comprising program code instructions to execute the steps of the allocation method according to one of the preceding claims, when this program is executed by at least one processor (3).

10. Secure element (1) such as a smart card, comprising:
• at least one memory (2),
• at least one processor (3) configured to execute the computer program product according to the preceding claim, for the purpose of allocating space in the memory (2).
